# EUROPEAN PATENT APPLICATION

(11) **EP 4 768 632 A1**
(43) Date of publication of application: **01.07.2026**
(21) Application number: 24856496.5
(22) Date of filing: 21.08.2024
(51) Int. Cl.: C25B 11/093, B01J 23/34, B01J 23/656, C25B 1/04, C25B 9/00, C25B 11/042, C25B 11/052, C25B 11/079, C25B 11/081

(54) **ELECTRODE CONTAINING OXYGEN GENERATING ELECTRODE CATALYST**

(30) Priority: 23.08.2023 JP 2023135670; 24.06.2024 JP 2024100953
(71) Applicant: Tosoh Corporation, Yamaguchi 746-8501 (JP); RIKEN, Wako-shi, Saitama 351-0198 (JP)
(72) Inventor: OKADA, Takuya, Shunan-shi, Yamaguchi 746-8501 (JP); NAKAMURA, Ryuhei, Wako-shi, Saitama 351-0198 (JP); LI, Ailong, Wako-shi, Saitama 351-0198 (JP); FUSHIMI, Kazuna, Wako-shi, Saitama 351-0198 (JP)
(74) Representative: TBK
(86) International application number: PCT/JP2024/029715
(87) International publication number: WO 2025/041808

(57) **Abstract**

An electrode that exhibits higher oxygen evolution electrode catalytic activity than existing electrodes that use manganese-based oxide as the oxygen evolution electrocatalyst is provided.

## Description

### TECHNICAL FIELD

The present disclosure relates to an electrode including an oxygen evolution electrocatalyst containing at least one of manganese oxide and iridium-manganese oxide.

### BACKGROUND ART

To address issues of fossil fuel depletion and environmental pollution, use of hydrogen as a clean energy source and production techniques therefor have attracted much attention. One of the effective means for producing high-purity hydrogen gas is water electrolysis.

In water electrolysis, iridium-based catalysts are widely known as extremely highly active oxygen evolution electrocatalysts (for example, Non-Patent Document 1). However, compared with other precious metals, iridium reserves are extremely small, and while the water electrolysis technology may become prevalent in the future, there would not be enough iridium to afford the catalyst amount needed.

Under such circumstances, the present inventors have reported the prior art of oxygen evolution electrocatalysts using less iridium, that is, manganese oxide (Patent Document 1) and iridium-manganese oxide (Patent Document 2) obtained by doping manganese oxide with a small amount of iridium.

### PRIOR ART DOCUMENTS

### PATENT DOCUMENTS

Patent Document 1: International Publication No. 2019/117199
Patent Document 2: International Publication No. 2022/264960

### NON-PATENT DOCUMENTS

Non-Patent Document 1: F. Birol, World Energy Outlook 2016, International Energy Agency (IEA), Paris, 2016.

### DISCLOSURE OF INVENTION

### TECHNICAL PROBLEM

Although manganese oxide in patent document 1 and iridium-manganese oxide in patent document 2 have high oxygen evolution electrode catalytic activity, further improvements on performance are needed to meet growing demand for more efficient water electrolysis in recent years.

An object of the present disclosure is to provide at least one of an electrode that exhibits high oxygen evolution electrode catalytic activity compared to existing electrodes in which manganese oxide and iridium-manganese oxide (hereinafter may also be referred to as "manganese-based oxide") are used as the oxygen evolution electrocatalyst, a water electrolysis method using the same and a hydrogen production method that uses the electrode.

### SOLUTION TO PROBLEM

Studies on the existing electrodes that use manganese-based oxide as the oxygen evolution electrocatalyst as in Patent Documents 1 and 2 have not focused on the structure of conductive substrates that constitute such electrodes. In the present disclosure, the relationship between the catalyst and the structure of a conductive substrate constituting an oxygen evolution electrode has been studied. As a result, it has been found that, by controlling the thickness of the conductive substrate in an electrode that uses a manganese-based oxide as the oxygen evolution electrocatalyst, extremely high oxygen evolution electrode catalytic activity is exhibited compared to existing electrodes that serve as anodes for oxygen evolution reaction in electrolysis and that use manganese-based oxide as the oxygen evolution electrocatalyst.

In other words, the present invention is as set forth in the claims and is summarized as follows.
[1] An electrode comprising: an oxygen evolution electrocatalyst containing at least one of manganese oxide and iridium-manganese oxide; and a conductive substrate having a thickness of 50 µm or more and less than 500 µm.
[2] The electrode described in [1] above, wherein a content of the oxygen evolution electrocatalyst per geometric area of the electrode is 0.1 mg/cm² or more and 12.0 mg/cm² or less.
[3] The electrode described in [1] or [2] above, wherein the oxygen evolution electrocatalyst is iridium-manganese oxide.
[4] The electrode described in [3] above, wherein an iridium content per geometric area of the electrode is 0.01 mg/cm² or more and 1.0 mg/cm² or less.
[5] The electrode described in [3] or [4] above, wherein a molar ratio of iridium to manganese is 0.001 or more and 0.100 or less.
[6] The electrode described in any one of [1] to [5] above, wherein the conductive substrate contains titanium.
[7] A water electrolysis apparatus comprising the electrode described in any one of [1] to [6] above.
[8] A hydrogen production method comprising performing water electrolysis by using the electrode described in any one of [1] to [6] above.

### ADVANTAGEOUS EFFECTS OF INVENTION

According to the present disclosure, at least one of an electrode that exhibits high oxygen evolution electrode catalytic activity compared to existing electrodes in which manganese-based oxide is used as the oxygen evolution electrocatalyst, a water electrolysis method using the same and a hydrogen production method that uses the electrode can be provided.

### DESCRIPTION OF EMBODIMENTS

An embodiment of the present disclosure will now be described.

An electrode of the present embodiment is an electrode that comprises an oxygen evolution electrocatalyst containing at least one of manganese oxide and iridium-manganese oxide; and a conductive substrate having a thickness of 50 µm or more and less than 500 µm.

The oxygen evolution electrocatalyst contained in the electrode of the present embodiment is an oxygen evolution electrocatalyst (hereinafter may also be referred to as a "manganese-based electrocatalyst") that contains at least one of manganese oxide and iridium-manganese oxide. Thus, the electrode of the present embodiment functions as an oxygen evolution electrode.

The manganese-based electrocatalyst preferably contains manganese oxide, more preferably contains manganese dioxide, yet more preferably contains manganese dioxide having γ-, β-, ε- or α-crystal structure and still more preferably contains manganese dioxide having β-crystal structure. The crystal structure of the manganese-based electrocatalyst is preferably single-phased but may be mix-phased by having two or more manganese-based electrocatalysts each having a single-phased crystal structure or by having multiple crystal structures.

In the present embodiment, the crystal structure of the manganese-based electrocatalyst can be identified by comparing the powder X-ray diffraction (hereinafter may also be referred to as "XRD") pattern thereof with XRD patterns (hereinafter may also be referred to as "reference patterns") registered in the powder diffraction file (PDF) of the International Centre for Diffraction Data (ICDD). PDF No. 14-0644 (γ), 24-0735 (β), 30-0820 (ε) and 44-0141 (α) may be respectively used as the reference patterns of manganese dioxide having γ-, β-, ε- and α-crystal structures.

In the present embodiment, the XRD pattern may be any pattern obtained by XRD measurement under the conditions described below using a common powder X-ray diffractometer (for example, instrument name: Ultima IV Protectus produced by Rigaku Corporation).
Accelerating current·voltage: 40 mA·40 kV
Radiation source: CuKα radiation (λ = 1.5405 Å)
Measurement mode: continuous scan
Scan condition: 4°/minute
Measurement range: 2θ = 10° to 80°
Divergence height slit: 10 mm
Divergence/incident slit: 1°
Receiving slit: open
Detector: D/teX Ultra
with Ni filter

The XRD peak is a peak for which 20 of the peak top is detected by analysis of an XRD pattern using common analytical software (for example, IGOR Pro8 produced by WaveMetrics or SmartLab Studio II produced by Rigaku Corporation).

The content of the oxygen evolution electrocatalyst per geometric area of the electrode of the present embodiment (hereinafter this content may also be referred to as the "catalyst content") is preferably 0.1 mg/cm² or more and 12.0 mg/cm² or less, more preferably 0.5 mg/cm² or more and 11.0 mg/cm² or less and yet more preferably 0.8 mg/cm² or more and 10.0 mg/cm² or less.

"Geometric area" is an area equivalent to the projected area that does not consider surface irregularities and voids and is a projected area of a surface (geometric surface) facing an electrolyte membrane in a membrane-electrode assembly (hereinafter may also be referred to as "MEA"). The "geometric area of the electrode" is the projected area of the electrode and, when the shape of the electrode is defined by length ×width × height, the geometric area of the electrode is the area of a plane given by length × width.

To enhance the activity as the oxygen evolution electrocatalyst, the manganese-based electrocatalyst is preferably a catalyst containing manganese oxide and iridium (iridium-manganese oxide). Iridium-manganese oxide is, for example, a material in which iridium is supported on manganese oxide or a material in which iridium is dispersed over the surface of manganese oxide. The average metal valence of iridium is preferably 3.1 or more and 3.8 or less.

In an electrode in which iridium-manganese oxide is used in an oxygen evolution electrode, the content of iridium (hereinafter may also be referred to as the "iridium content") per geometric area of the electrode is preferably 0.001 mg/cm² or more, more preferably 0.005 mg/cm² or more, yet more preferably 0.01 mg/cm² or more and particularly preferably 0.02 mg/cm² or more and the iridium content is preferably 1.0 mg/cm² or less, more preferably 0.75 mg/cm² or less and yet more preferably 0.5 mg/cm² or less. When the upper limit or the lower limit of the iridium content is this value, high oxygen evolution electrode catalytic activity is easily exhibited when combined with the conductive substrate described below. The iridium content is preferably 0.001 mg/cm² or more and 1.0 mg/cm² or less, 0.005 mg/cm² or more and 0.75 mg/cm² or less or 0.01 mg/cm² or more and 0.5 mg/cm² or less.

The molar ratio of iridium to manganese (hereinafter may also be referred to as the "Ir/Mn molar ratio") in iridium-manganese oxide is preferably 0.001 or more, more preferably 0.002 or more and yet more preferably 0.010 or more. The Ir/Mn molar ratio is preferably 0.100 or less, more preferably 0.075 or less and yet more preferably 0.050 or less. When the upper limit or the lower limit of the Ir/Mn molar ratio is this value, high oxygen evolution electrode catalytic activity is easily exhibited when combined with the conductive substrate described below. The Ir/Mn molar ratio is preferably 0.001 or more and 0.100 or less, 0.002 or more and 0.075 or less or 0.010 or more and 0.050 or less.

The electrode of the present embodiment includes a conductive substrate having a thickness of 50 µm or more and less than 500 µm. In general, the thickness of the conductive substrate has little effect on the oxygen evolution electrode catalytic activity, and decreasing the thickness of the conductive substrate slightly improves the current efficiency (for example, S. Toghyani et al., Energy, 2018, 152, 237-246). In contrast, the feature that the thickness of the conductive substrate in the electrode of the present embodiment is less than 500 µm offers a prominent effect in that the oxygen evolution electrode catalytic activity of the manganese-based electrocatalyst dramatically improves.

When the thickness of the conductive substrate is less than 50 µm, the mechanical strength of the conductive substrate decreases, and the electrode becomes prone to damage. Meanwhile, when the thickness of the conductive substrate is 500 µm or more, the electrical resistance of the conductive substrate increases, and the oxygen evolution electrode catalytic activity decreases as a result. In order to achieve higher oxygen evolution electrode catalytic activity, the thickness of the conductive substrate is preferably 75 µm or more and more preferably 100 µm or more. In addition, the thickness of the conductive substrate is preferably 450 µm or less, more preferably 300 µm or less, yet more preferably less than 300 µm and particularly preferably 250 µm or less. The range of the thickness of the conductive substrate is preferably 50 µm or more and 450 µm or less, more preferably 75 µm or more and 300 µm or less and yet more preferably 100 µm or more and 250 µm or less.

The "thickness" is the length equivalent to the length in a perpendicular direction with respect to a geometric surface. The "thickness of the conductive substrate" is the length equivalent to the length in a perpendicular direction with respect to the geometric surface of the conductive substrate and is a length equivalent to the height when the shape of the electrode is defined by length × width × height.

The conductive substrate may be any substrate made of a conductive material and is preferably a substrate containing titanium.

The shape of the conductive substrate is, for example, at least one selected from the group consisting of a mesh shape, a cloth shape and a plate shape, and is preferably a mesh shape since the oxygen evolution electrode catalytic activity tends to increase. Specific examples of the conductive substrate include a titanium mesh composed of fibrous or powdery conductive metal titanium and a sintered titanium mesh obtained by heat-treating the titanium mesh. To smoothly induce high oxygen evolution electrode catalytic activity, these conductive substrates preferably have platinum-coated surfaces, and the conductive substrate is more preferably a platinum-coated titanium mesh or a platinum-coated sintered titanium mesh.

The porosity of the conductive substrate is preferably 30% or more and 80% or less and more preferably 40% or more and 70% or less. Here, the porosity is defined by the volume of the empty space where the conductive substrate and the like are absent relative to the volume of the conductive substrate and can be measured by, for example, mercury porosimetry. At a porosity within the aforementioned range, superior effects are achieved in that the mechanical strength of the electrode is increased and water, which is the reaction substrate for oxygen evolution, can be smoothly supplied.

The electrode of the present embodiment includes a manganese-based electrocatalyst and a conductive substrate and is preferably constituted by a conductive substrate at least partly coated with a manganese-based electrocatalyst (hereinafter may also be referred to as the "composite electrode material"). The manganese oxide composite electrode material is a material in which at least part of the conductive substrate is coated with the aforementioned manganese oxide, and the iridium-manganese oxide composite electrode material is a material in which at least part of the conductive substrate is coated with the aforementioned iridium-manganese oxide.

Examples of the structure of the electrode of the present embodiment include an electrode having a structure in which manganese oxide is supported on the surface of the conductive substrate, an electrode having a structure in which manganese oxide and iridium are supported on the surface of the conductive substrate, and an electrode having a structure in which manganese oxide is supported on the surface of the conductive substrate and iridium is supported on the manganese oxide.

The electrode of the present embodiment can be used as an oxygen evolution electrode and is preferably used as an oxygen evolution electrode of a water electrolysis apparatus.

The electrode of the present embodiment can be used in a hydrogen production method involving performing water electrolysis by using the electrode.

A method for producing the electrode of the present embodiment will now be described.

The method for producing the electrode of the present embodiment is not particularly limited as long as the electrode having the aforementioned features is obtained; for example, a preferable production method includes an electrolysis step of obtaining a manganese oxide-containing substrate by electrolytically depositing manganese oxide on a conductive substrate and a heat treatment step of heat-treating the manganese oxide-containing substrate.

In the electrolysis step, manganese oxide is electrolytically deposited on a conductive substrate. As a result, a manganese oxide-containing substrate is obtained.

The electrolytic deposition method may be any as long as manganese oxide is electrolytically deposited on the surface of the conductive substrate, and, for example, the method may involve immersing a conductive substrate in an electrolyte and electrolyzing the conductive substrate.

The electrolyte may be a solution containing manganese. The manganese concentration of the electrolyte is preferably 5 g/L or more and 50 g/L or less.

The electrolyte is preferably a solution containing manganese sulfate and is more preferably an aqueous manganese sulfate solution. In this case, the sulfuric acid concentration is preferably 5 g/L or more and 65 g/L or less and the manganese concentration is preferably 5 g/L or more and 50 g/L or less.

The conductive substrate subjected to the electrolysis step may be the aforementioned conductive substrate, may have a thickness of less than 500 µm, preferably has a thickness of 300 µm or less and is preferably a platinum-coated titanium mesh or further preferably a platinum-coated sintered titanium mesh.

In the electrolysis, the conductive substrate may be immersed in the electrolyte and electrolyzed. The conditions for the electrolysis may be any conditions under which manganese oxide is electrolytically deposited; for example, the current density per geometric area of the conductive substrate is 0.3 mA/cm² or more and 20 mA/cm² or less and the electrolysis temperature is 93°C or higher and 98°C or lower.

In the heat treatment step, the manganese oxide-containing substrate is heat-treated. As a result, adhesion between manganese oxide and the conductive substrate is enhanced. The heat treatment in the heat treatment step may be performed under the conditions under which manganese oxide in the manganese oxide-containing substrate can maintain the aforementioned crystal structure; for example, the heat treatment atmosphere is an air atmosphere or an inert atmosphere or is an air atmosphere, and the heat treatment temperature is 100°C or higher and 600°C or lower. The heat treatment time may be adjusted, as appropriate, according to the size of the conductive substrate subjected to the heat treatment and is, for example, 10 minutes or more and 24 hours or less.

When an electrode in which the manganese-based electrocatalyst is iridium-manganese oxide is to be produced, a contact step of bringing the manganese oxide-containing substrate into contact with an iridium salt solution is preferably provided before the heat treatment step. In this manner, an iridium-manganese oxide-containing substrate is obtained, and this iridium-manganese oxide-containing substrate instead of the manganese oxide-containing substrate may be subjected to the heat treatment step.

The iridium salt solution used in the contact step may be a solution containing an iridium salt and is preferably a solution containing an iridium salt and sulfuric acid and more preferably an aqueous solution containing an iridium salt and sulfuric acid. The iridium salt is, for example, at least one of potassium hexachloroiridate (K₂IrCl₆)) and hexachloroiridate (H₂IrCl₆).

The iridium concentration of the iridium salt solution is preferably 0.001 g/L or more and 10 g/L or less.

The contact between the manganese oxide-containing substrate and the iridium salt solution may be made by immersing the manganese oxide-containing substrate in an iridium salt solution. Contact is not particularly limited as long as the surface of the manganese oxide-containing substrate is impregnated with iridium, and the contact temperature is, for example, 20°C or higher and 100°C or lower. The contact time may be adjusted, as appropriate, according to the size of the manganese oxide-containing conductive substrate and is, for example, 30 minutes or more and 24 hours or less.

### EXAMPLES

The present disclosure will now be described in detail through Examples and Comparative examples; however, these examples do not limit the present disclosure.

### <Analyzing metal content in electrode>

Into 10 mL of a hydrochloric acid-nitric acid mixed solution, a 10 mm length × 10 mm width sample electrode was immersed and the oxygen evolution electrocatalyst contained in the electrode is dissolved to obtain a sample solution. The composition of the sample solution was measured with a common ICP instrument (instrument name: Optima 830 produced by PerkinElmer) by inductively coupled plasma atomic emission spectrometry (ICP-AES).

### <Identifying crystal structure>

An XRD pattern was obtained under the following conditions with a common powder X-ray diffractometer (instrument name: Ultima IV Protectus produced by Rigaku Corporation).
Accelerating current·voltage: 40 mA·40 kV
Radiation source: CuKα radiation (λ = 1.5405 Å)
Measurement mode: continuous scan
Scan condition: 4°/minute
Measurement range: 2θ = 10° to 80°
Divergence height slit: 10 mm
Divergence/incident slit: 1°
Receiving slit: open
Detector: D/teX Ultra
with Ni filter

The obtained XRD pattern was compared with XRD patterns (hereinafter may also be referred to as "reference patterns") registered in the powder diffraction file (PDF) of the International Centre for Diffraction Data (ICDD) to identify crystal phases. PDF No. 14-0644 (γ), 24-0735 (β), 30-0820 (ε) and 44-0141 (α) were used as the reference patterns of manganese dioxide having γ-, β-, ε- and α-crystal structures, respectively.

### <Measuring oxygen evolution electrode catalytic activity>

The oxygen evolution electrode catalytic activity was evaluated by using a PEM-type water electrolysis cell with the electrode of Example or Comparative example functioning as a working electrode (anode) by two-electrode linear sweep voltammetry (LSV) under the following conditions.

Voltage increase rate: 10 mV/second
Water temperature: 80°C
Water feed rate: 2 mL/minute

A current density at a voltage of 2 V (hereinafter this may simply referred to as the "current density") was determined from the evaluation. In addition, the ratio (hereinafter may also be referred to as the "relative current density") of the current density of the electrode of Example or Comparative example to the current density of the electrode having a 500 µm-thick conductive substrate was determined.

### <Manganese oxide>

### Example 1

An electrolytic cell was loaded with a sulfuric acid-manganese sulfate mixed solution having a sulfuric acid concentration of 35 g/L and a manganese sulfate concentration of 31 g/L, and, therein, a conductive substrate composed of Pt-coated Ti fibers (trade name: titanium fiber sintered body 2GDL08N-020 BS05PT platinum-coated product produced by Bekaert, thickness: 200 µm, Pt thickness: 0.5 µm, porosity: 56%) was immersed. Current was applied to the conductive substrate at a current density of 7 mA/cm² for 10 minutes to electrochemically deposit manganese oxide on the conductive substrate.

The obtained conductive substrate with manganese oxide electrochemically deposited thereon was annealed in an air atmosphere at 450°C for 5 hours to obtain a manganese oxide composite electrode material, and this material was used as the electrode of this example.

The electrode of this example was an electrode in which an oxygen evolution electrocatalyst composed of manganese dioxide (manganese oxide) having β-crystal structure was disposed on a 200 µm-thick conductive substrate composed of Pt-coated Ti fibers, and had a manganese content of 1.2 mg/cm² (iridium content: 0 g/cm², Ir/Mn molar ratio: 0).

### [Oxygen evolution electrode catalytic activity]

A PEM-type water electrolysis cell equipped with a membrane-electrode assembly (hereinafter may also be referred to as the "MEA") prepared by the method below using the electrode of this example as the working electrode (anode) was prepared. A solution containing water, ethanol and an ionomer (product name: Nafion dispersion solution produced by Sigma-Aldrich) was mixed with a 20 mass% platinum-supporting carbon catalyst (product name: 20% Platinum on Vulcan XC-72 produced by Sigma-Aldrich) to prepare a conductive catalyst ink. The ink was applied to a sheet of carbon paper (product name: TGP-H-060 produced by TORAY INDUSTRIES, INC.) and air-dried to prepare a counter electrode.

Next, a Nafion membrane (product name: Nafion 115 produced by Sigma-Aldrich) was washed and protonated by sequentially boiling the membrane in a 3 mass% hydrogen peroxide solution for 1 hour, in pure water for 1 hour, in a 1M aqueous sulfuric acid solution for 1 hour and in pure water for 1 hour, and the resulting membrane was used as the electrolyte membrane.

The electrolyte membrane was sandwiched between catalyst surfaces of the working electrode (anode), which was the sample electrode, and the counter electrode, and the resulting stack was hot-pressed with a hot press machine (product name: SA-302 produced by TESTER SANGYO CO., LTD.) at 135°C and a clamping force of 400 kg/cm² for 3 minutes to obtain a MEA. The obtained MEA was installed in a casing of a PEM-type water electrolysis cell (product name: WE-4S-RICW produced by FC Development Co., Ltd.) to prepare a PEM-type water electrolysis cell.

The obtained PEM-type water electrolysis cell was used to evaluate the oxygen evolution electrode catalytic activity.

### Example 2

An electrode of this example was obtained as in Example 1 except that Pt-coated Ti fibers (product name: Pt-coated Ti fiber sintered body produced by TANAKA PRECIOUS METAL GROUP Co., Ltd.) having a thickness of 300 µm, a Pt thickness of 0.5 µm and a porosity of 56% were used as the conductive substrate.

The electrode of this example was an electrode in which an oxygen evolution electrocatalyst composed of manganese dioxide (manganese oxide) having β-crystal structure was disposed on a 300 µm-thick conductive substrate composed of Pt-coated Ti fibers, and had manganese content of 1.2 mg/cm² (iridium content: 0 g/cm², Ir/Mn molar ratio: 0).

The oxygen evolution electrode catalytic activity was evaluated as in Example 1 except that the electrode of this example was used as the working electrode (anode).

### Comparative example 1

An electrode of this comparative example was obtained as in Example 1 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide (manganese oxide) having β-crystal structure was disposed on a 500 µm-thick conductive substrate composed of Pt-coated Ti fibers, and had a manganese content of 1.2 mg/cm² (iridium content: 0 g/cm², Ir/Mn molar ratio: 0).

The oxygen evolution electrode catalytic activity was evaluated as in Example 1 except that the electrode of this comparative example was used as the working electrode (anode).

The evaluation results of Examples 1 and 2 and Comparative example 1 are indicated in the table below. Here, the current density in the table below is the value at a voltage of 2 V.

**[Table 1]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 1 | 1.2 | 0 | 0 | 200 | 1.6 | 267 |
| Example 2 | 1.2 | 0 | 0 | 300 | 1.0 | 167 |
| Comparative Example 1 | 1.2 | 0 | 0 | 500 | 0.6 | 100 |

### Example 3

An electrode of this example was obtained as in Example 1 except that Pt-coated Ti fibers (product name: Pt-coated Ti fiber sintered body produced by TANAKA PRECIOUS METAL GROUP Co., Ltd.) having a thickness of 200 µm, a Pt thickness of 0.5 µm and a porosity of 56% were used as the conductive substrate and that the time for which the current was applied was 20 minutes.

The electrode of this example was an electrode in which an oxygen evolution electrocatalyst composed of manganese dioxide (manganese oxide) having β-crystal structure was disposed on a 200 µm-thick conductive substrate composed of Pt-coated Ti fibers, and had a manganese content of 2.4 mg/cm² (iridium content: 0 g/cm², Ir/Mn molar ratio: 0).

The oxygen evolution electrode catalytic activity was evaluated as in Example 1 except that the electrode of this example was used as the working electrode (anode).

### Comparative example 2

An electrode of this comparative example was obtained as in Example 3 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide (manganese oxide) having β-crystal structure was disposed on a 500 µm-thick conductive substrate composed of Pt-coated Ti fibers, and had a manganese content of 2.4 mg/cm² (iridium content: 0 g/cm², Ir/Mn molar ratio: 0).

The oxygen evolution electrode catalytic activity was evaluated as in Example 1 except that the electrode of this comparative example was used as the working electrode (anode).

The evaluation results of Example 3 and Comparative example 2 are indicated in the table below. Here, the current density in the table below is the value at a voltage of 2 V.

**[Table 2]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 3 | 2.4 | 0 | 0 | 200 | 1.8 | 225 |
| Comparative Example 2 | 2.4 | 0 | 0 | 500 | 0.8 | 100 |

### Example 4

An electrode of this example was obtained as in Example 3 except that the time for which the current was applied was 5 minutes.

The electrode of this example was an electrode in which an oxygen evolution electrocatalyst composed of manganese dioxide (manganese oxide) having β-crystal structure was disposed on a 200 µm-thick conductive substrate composed of Pt-coated Ti fibers, and had a manganese content of 0.6 mg/cm² (iridium content: 0 g/cm², Ir/Mn molar ratio: 0).

The oxygen evolution electrode catalytic activity was evaluated as in Example 1 except that the electrode of this example was used as the working electrode (anode).

### Comparative example 3

An electrode of this comparative example was obtained as in Example 4 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide (manganese oxide) having β-crystal structure was disposed on a 500 µm-thick conductive substrate composed of Pt-coated Ti fibers, and had a manganese content of 0.6 mg/cm² (iridium content: 0 g/cm², Ir/Mn molar ratio: 0).

The oxygen evolution electrode catalytic activity was evaluated as in Example 1 except that the electrode of this comparative example was used as the working electrode (anode).

The evaluation results of Example 4 and Comparative example 3 are indicated in the table below. Here, the current density in the table below is the value at a voltage of 2 V.

**[Table 3]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 4 | 0.6 | 0 | 0 | 200 | 1.8 | 225 |
| Comparative Example 3 | 0.6 | 0 | 0 | 500 | 0.8 | 100 |

It could be confirmed that, compared with existing (thickness of conductive substrate: 500 µm) electrodes that use manganese oxide as the oxygen evolution electrocatalyst, the electrode that used manganese oxide as the oxygen evolution electrocatalyst exhibited prominently improved oxygen evolution electrode catalytic activity as the thickness of the conductive substrate decreased.

### <Iridium-manganese oxide>

### Example 5

A manganese oxide composite electrode material was obtained as in Example 1 except that Pt-coated Ti fibers (product name: Pt-coated Ti fiber sintered body produced by TANAKA PRECIOUS METAL GROUP Co., Ltd.) having a thickness of 200 µm, a Pt thickness of 0.5 µm and a porosity of 56% were used as the conductive substrate. Next, this manganese oxide composite electrode material was immersed in an iridium salt solution containing 0.05 g/L potassium hexachloroiridate (K₂lrCl₆) and 0.5 g/L sulfuric acid at 95°C for 168 hours and then annealed in an air atmosphere at 450°C for 5 hours to obtain an iridium-manganese oxide composite electrode material, and this material was used as the electrode of this example.

The electrode of this example was an electrode in which an oxygen evolution electrocatalyst composed of manganese dioxide supporting iridium on the surface thereof (iridium-manganese oxide) and having β-crystal structure was disposed on a 200 µm-thick conductive substrate composed of Pt-coated Ti fibers, and had a manganese content of 1.2 mg/cm² and an iridium content of 0.20 mg/cm² (Ir/Mn molar ratio: 0.048).

The oxygen evolution electrode catalytic activity was evaluated as in Example 1 except that the electrode of this example was used as the working electrode (anode).

### Comparative example 4

An electrode of this comparative example was obtained as in Example 5 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide supporting iridium on the surface thereof (iridium-manganese oxide) and having β-crystal structure was disposed on a 500 µm-thick conductive substrate composed of Pt-coated Ti fibers, and had a manganese content of 1.2 mg/cm² and an iridium content of 0.20 mg/cm² (Ir/Mn molar ratio: 0.048).

The oxygen evolution electrode catalytic activity was evaluated as in Example 1 except that the electrode of this comparative example was used as the working electrode (anode).

The evaluation results of Example 5 and Comparative example 4 are indicated in the table below. Here, the current density in the table below is the value at a voltage of 2 V.

**[Table 4]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 5 | 1.2 | 0.20 | 0.048 | 200 | 3.1 | 207 |
| Comparative Example 4 | 1.2 | 0.20 | 0.048 | 500 | 1.5 | 100 |

### Example 6

A manganese oxide composite electrode material was obtained as in Example 1 except that Pt-coated Ti fibers (product name: Pt-coated Ti fiber sintered body produced by TANAKA PRECIOUS METAL GROUP Co., Ltd.) having a thickness of 100 µm, a Pt thickness of 0.5 µm and a porosity of 56% were used as the conductive substrate. Next, an electrode of this example was obtained as in Example 5 except that the K₂IrCl₆ concentration in the iridium salt solution was 0.02 g/L and the manganese oxide composite electrode material was immersed in the iridium salt solution for 24 hours.

The electrode of this example was an electrode in which an oxygen evolution electrocatalyst composed of manganese dioxide supporting iridium on the surface thereof (iridium-manganese oxide) and having β-crystal structure was disposed on a 100 µm-thick conductive substrate composed of Pt-coated Ti fibers, and had a manganese content of 1.2 mg/cm² and an iridium content of 0.10 mg/cm² (Ir/Mn molar ratio: 0.024).

The oxygen evolution electrode catalytic activity was evaluated as in Example 1 except that the electrode of this example was used as the working electrode (anode).

### Example 7

An electrode of this example was obtained as in Example 6 except that Pt-coated Ti fibers (trade name: titanium fiber sintered body 2GDL08N-020 BS05PT platinum-coated product produced by Bekaert, thickness: 200 µm, Pt thickness: 0.5 µm, porosity: 56%) were used as the conductive substrate.

The electrode of this example was an electrode in which an oxygen evolution electrocatalyst composed of manganese dioxide supporting iridium on the surface thereof (iridium-manganese oxide) and having β-crystal structure was disposed on a 200 µm-thick conductive substrate composed of Pt-coated Ti fibers, and had a manganese content of 1.2 mg/cm² and an iridium content of 0.10 mg/cm² (Ir/Mn molar ratio: 0.024).

The oxygen evolution electrode catalytic activity was evaluated as in Example 1 except that the electrode of this example was used as the working electrode (anode).

### Example 8

An electrode of this example was obtained as in Example 6 except that Pt-coated Ti fibers (product name: Pt-coated Ti fiber sintered body produced by TANAKA PRECIOUS METAL GROUP Co., Ltd.) having a thickness of 300 µm, a Pt thickness of 0.5 µm and a porosity of 56% were used as the conductive substrate.

The electrode of this example was an electrode in which an oxygen evolution electrocatalyst composed of manganese dioxide supporting iridium on the surface thereof (iridium-manganese oxide) and having β-crystal structure was disposed on a 300 µm-thick conductive substrate composed of Pt-coated Ti fibers, and had a manganese content of 1.2 mg/cm² and an iridium content of 0.10 mg/cm² (Ir/Mn molar ratio: 0.024).

The oxygen evolution electrode catalytic activity was evaluated as in Example 1 except that the electrode of this example was used as the working electrode (anode).

### Comparative example 5

An electrode of this comparative example was obtained as in Example 6 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide supporting iridium on the surface thereof (iridium-manganese oxide) and having β-crystal structure was disposed on a 500 µm-thick conductive substrate composed of Pt-coated Ti fibers, and had a manganese content of 1.2 mg/cm² and an iridium content of 0.10 mg/cm² (Ir/Mn molar ratio: 0.024).

The oxygen evolution electrode catalytic activity was evaluated as in Example 1 except that the electrode of this comparative example was used as the working electrode (anode).

The evaluation results of Examples 6 to 8 and Comparative example 5 are indicated in the table below. Here, the current density in the table below is the value at a voltage of 2 V.

**[Table 5]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 6 | 1.2 | 0.10 | 0.024 | 100 | 2.2 | 275 |
| Example 7 | 1.2 | 0.10 | 0.024 | 200 | 3.7 | 463 |
| Example 8 | 1.2 | 0.10 | 0.024 | 300 | 2.5 | 313 |
| Comparative Example 5 | 1.2 | 0.10 | 0.024 | 500 | 0.8 | 100 |

### Example 9

An electrode of this example was obtained as in Example 7 except that the K₂IrCl₆ concentration in the iridium salt solution was 0.01 g/L.

The electrode of this example was an electrode in which an oxygen evolution electrocatalyst composed of manganese dioxide supporting iridium on the surface thereof (iridium-manganese oxide) and having β-crystal structure was disposed on a 200 µm-thick conductive substrate composed of Pt-coated Ti fibers, and had a manganese content of 1.2 mg/cm² and an iridium content of 0.01 mg/cm² (Ir/Mn molar ratio: 0.002).

The oxygen evolution electrode catalytic activity was evaluated as in Example 1 except that the electrode of this example was used as the working electrode (anode).

### Comparative example 6

An electrode of this comparative example was obtained as in Example 9 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide supporting iridium on the surface thereof (iridium-manganese oxide) and having β-crystal structure was disposed on a 500 µm-thick conductive substrate composed of Pt-coated Ti fibers, and had a manganese content of 1.2 mg/cm² and an iridium content of 0.01 mg/cm² (Ir/Mn molar ratio: 0.002).

The oxygen evolution electrode catalytic activity was evaluated as in Example 1 except that the electrode of this comparative example was used as the working electrode (anode).

The evaluation results of Example 9 and Comparative example 6 are indicated in the table below. Here, the current density in the table below is the value at a voltage of 2 V.

**[Table 6]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 9 | 1.2 | 0.01 | 0.002 | 200 | 1.9 | 238 |
| Comparative Example 6 | 1.2 | 0.01 | 0.002 | 500 | 0.8 | 100 |

### Example 10

A manganese oxide composite electrode material was obtained as in Example 3. Next, an electrode of this example was obtained as in Example 7 except that this manganese oxide composite electrode material was used.

The electrode of this example was an electrode in which an oxygen evolution electrocatalyst composed of manganese dioxide supporting iridium on the surface thereof (iridium-manganese oxide) and having β-crystal structure was disposed on a 200 µm-thick conductive substrate composed of Pt-coated Ti fibers, and had a manganese content of 2.4 mg/cm² and an iridium content of 0.10 mg/cm² (Ir/Mn molar ratio: 0.012).

The oxygen evolution electrode catalytic activity was evaluated as in Example 1 except that the electrode of this example was used as the working electrode (anode).

### Comparative example 7

An electrode of this comparative example was obtained as in Example 10 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide supporting iridium on the surface thereof (iridium-manganese oxide) and having β-crystal structure was disposed on a 500 µm-thick conductive substrate composed of Pt-coated Ti fibers, and had a manganese content of 2.4 mg/cm² and an iridium content of 0.10 mg/cm² (Ir/Mn molar ratio: 0.012).

The oxygen evolution electrode catalytic activity was evaluated as in Example 1 except that the electrode of this comparative example was used as the working electrode (anode).

The evaluation results of Example 10 and Comparative example 7 are indicated in the table below. Here, the current density in the table below is the value at a voltage of 2 V.

**[Table 7]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 10 | 2.4 | 0.10 | 0.012 | 200 | 2.7 | 270 |
| Comparative Example 7 | 2.4 | 0.10 | 0.012 | 500 | 1.0 | 100 |

### Example 11

A manganese oxide composite electrode material was obtained as in Example 4. Next, an electrode of this example was obtained as in Example 7 except that this manganese oxide composite electrode material was used.

The electrode of this example was an electrode in which an oxygen evolution electrocatalyst composed of manganese dioxide supporting iridium on the surface thereof (iridium-manganese oxide) and having β-crystal structure was disposed on a 200 µm-thick conductive substrate composed of Pt-coated Ti fibers, and had a manganese content of 0.6 mg/cm² and an iridium content of 0.05 mg/cm² (Ir/Mn molar ratio: 0.024).

The oxygen evolution electrode catalytic activity was evaluated as in Example 1 except that the electrode of this example was used as the working electrode (anode).

### Comparative example 8

An electrode of this comparative example was obtained as in Example 11 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of manganese dioxide supporting iridium on the surface thereof (iridium-manganese oxide) and having β-crystal structure was disposed on a 500 µm-thick conductive substrate composed of Pt-coated Ti fibers, and had a manganese content of 0.6 mg/cm² and an iridium content of 0.05 mg/cm² (Ir/Mn molar ratio: 0.024).

The oxygen evolution electrode catalytic activity was evaluated as in Example 1 except that the electrode of this comparative example was used as the working electrode (anode).

The evaluation results of Example 11 and Comparative example 8 are indicated in the table below. Here, the current density in the table below is the value at a voltage of 2 V.

**[Table 8]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Example 11 | 0.6 | 0.05 | 0.024 | 200 | 3.2 | 267 |
| Comparative Example 8 | 0.6 | 0.05 | 0.024 | 500 | 1.2 | 100 |

It could be confirmed that, compared with existing (thickness of conductive substrate: 500 µm) electrodes that use iridium-manganese oxide as the oxygen evolution electrocatalyst, the electrode that used iridium-manganese oxide as the oxygen evolution electrocatalyst exhibited prominently improved oxygen evolution electrode catalytic activity as the thickness of the conductive substrate decreased.

### <Iridium oxide>

### Comparative example 9

A commercially available iridium oxide powder (produced by TANAKA PRECIOUS METAL GROUP Co., Ltd.) and pure water were mixed to prepare a conductive catalyst ink containing 4.7 g/L of iridium oxide, and this ink was applied to a conductive substrate composed of Pt-coated Ti fibers (trade name: titanium fiber sintered body 2GDL08N-020 BS05PT platinum-coated product produced by Bekaert, thickness: 200 µm, Pt thickness: 0.5 µm, porosity: 56%) and air-dried.

The obtained conductive substrate containing iridium oxide was annealed in an air atmosphere at 450°C for 5 hours to obtain an iridium oxide composite electrode material, and this material was used as the electrode of this comparative example.

The electrode of this comparative example was an electrode in which an oxygen evolution electrocatalyst composed of iridium oxide was disposed on a 200 µm-thick conductive substrate composed of Pt-coated Ti fibers, and had an iridium content of 0.1 mg/cm² (manganese content: 0 g/cm², Ir/Mn molar ratio: ∞).

The oxygen evolution electrode catalytic activity was evaluated as in Example 1 except that the electrode of this comparative example was used as the working electrode (anode).

### Comparative example 10

An electrode of this comparative example was obtained as in Comparative example 9 except that Pt-coated Ti fibers (product name: Pt-coated Ti fiber sintered body produced by TANAKA PRECIOUS METAL GROUP Co., Ltd.) having a thickness of 300 µm, a Pt thickness of 0.5 µm and a porosity of 56% were used as the conductive substrate.

The electrode of this comparative example was an electrode in which an oxygen evolution electrocatalyst composed of iridium oxide was disposed on a 300 µm-thick conductive substrate composed of Pt-coated Ti fibers, and had an iridium content of 0.1 mg/cm² (manganese content: 0 g/cm², Ir/Mn molar ratio: ∞).

The oxygen evolution electrode catalytic activity was evaluated as in Example 1 except that the electrode of this comparative example was used as the working electrode (anode).

### Comparative example 11

An electrode of this comparative example was obtained as in Comparative example 9 except that Pt-coated Ti fibers (product name: Pt-coated Ti fiber sintered body produced by TANAKA PRECIOUS METAL GROUP Co., Ltd.) having a thickness of 500 µm, a Pt thickness of 0.5 µm and a porosity of 56% were used as the conductive substrate.

The electrode of this comparative example was an electrode in which an oxygen evolution electrocatalyst composed of iridium oxide was disposed on a 500 µm-thick conductive substrate composed of Pt-coated Ti fibers, and had an iridium content of 0.1 mg/cm² (manganese content: 0 g/cm², Ir/Mn molar ratio: ∞).

The oxygen evolution electrode catalytic activity was evaluated as in Example 1 except that the electrode of this comparative example was used as the working electrode (anode).

The evaluation results of Comparative examples 9 to 11 are indicated in the table below. Here, the current density in the table below is the value at a voltage of 2 V.

**[Table 9]**

| | Composition | | | | Current density [A/cm²] | Relative current density [-] |
|---|---|---|---|---|---|---|
| | Manganese content [mg/cm²] | Iridium content [mg/cm²] | Ir/Mn molar ratio [-] | Substrate thickness [µm] | | |
| Comparative Example 9 | 0 | 0.10 | ∞ | 200 | 1.8 | 129 |
| Comparative Example 10 | 0 | 0.10 | ∞ | 300 | 1.6 | 114 |
| Comparative Example 11 | 0 | 0.10 | ∞ | 500 | 1.4 | 100 |

The electrode that used iridium oxide as the oxygen evolution electrocatalyst showed little changes in oxygen evolution electrode catalytic activity even when the thickness of the conductive substrate was decreased.

The aforementioned results could confirm that the notably improved oxygen evolution electrode catalytic activity caused by decreasing the thickness of the conductive substrate is a behavior specific to manganese oxide and iridium-manganese oxide.

The entire contents of the description, the claims and the abstract of Japanese Patent Application No. 2023-135670 filed August 23rd, 2023 and Japanese Patent Application No. 2024-100953 filed June 24th, 2024 are hereby incorporated by reference as the disclosure of the description of the present disclosure.

## Claims

1. An electrode comprising: an oxygen evolution electrocatalyst containing at least one of manganese oxide and iridium-manganese oxide; and a conductive substrate having a thickness of 50 µm or more and less than 500 µm.

2. The electrode according to claim 1, wherein a content of the oxygen evolution electrocatalyst per geometric area of the electrode is 0.1 mg/cm² or more and 12.0 mg/cm² or less.

3. The electrode according to claim 1 or 2, wherein the oxygen evolution electrocatalyst is iridium-manganese oxide.

4. The electrode according to claim 3, wherein an iridium content per geometric area of the electrode is 0.01 mg/cm² or more and 1.0 mg/cm² or less.

5. The electrode according to claim 3 or 4, wherein a molar ratio of iridium to manganese is 0.001 or more and 0.100 or less.

6. The electrode according to any one of claims 1 to 5, wherein the conductive substrate contains titanium.

7. A water electrolysis apparatus comprising the electrode according to any one of claims 1 to 6.

8. A hydrogen production method comprising performing water electrolysis by using the electrode according to any one of claims 1 to 6.
